# EUROPÄISCHE PATENTSCHRIFT

(11) **EP 4 073 878 B1**
(45) Veröffentlichungstag und Bekanntmachung des Hinweises auf die Patenterteilung: **04.09.2024**
(21) Anmeldenummer: 20820370.3
(22) Anmeldetag: 03.12.2020
(51) Int. Cl.: B60L 50/64

(54) **PARTIKELABSCHEIDER FÜR BATTERIEPACKS UND BATTERIEPACK MIT PARTIKELABSCHEIDER**
PARTICLE SEPARATOR FOR BATTERY PACKS AND BATTERY PACK WITH PARTICLE SEPARATOR
SÉPARATEUR DE PARTICULES POUR BLOCS-BATTERIES ET BLOC-BATTERIE AVEC SÉPARATEUR DE PARTICULES

(30) Priorität: 13.12.2019 DE 102019008657
(43) Veröffentlichungstag der Anmeldung: 19.10.2022
(73) Patentinhaber: Mercedes-Benz Group AG, 70372 Stuttgart (DE)
(72) Erfinder: GEISLER, Tobias, 73230 Kirchheim (DE); BLAUWITZ, Daniel, 73066 Uhingen (DE); KOCH, Sascha, 70180 Stuttgart (DE)
(74) Vertreter: Novagraaf Group
(86) Internationale Anmeldenummer: PCT/EP2020/084549
(87) Internationale Veröffentlichungsnummer: WO 2021/115936

(56) Entgegenhaltungen:
- DE-A1- 10 257 918
- DE-A1- 102017 213 608
- DE-A1- 19 830 557

## Beschreibung

Die Erfindung betrifft einen Partikelabscheider für Batteriepacks gemäß dem Oberbegriff des Anspruchs 1. Ferner betrifft die Erfindung ein Batteriegehäuse mit einem solchen Partikelabscheider gemäß dem Oberbegriff des Anspruchs 6, ein Batteriepack gemäß dem Anspruch 7 umfassend ein solches Batteriegehäuse mit einem darin gekapselten Batteriemodul sowie ein Kraftfahrzeug gemäß dem Anspruch 9 umfassend ein solches Batteriepack.

Das Dokument DE 10 2013 204 585 A1 schlägt ein Batteriepack beispielsweise zur Verwendung in Elektro- oder Hybridkraftfahrzeugen vor. Für einen Entgasungsfall, bei dem eine einzelne Batteriezelle beispielsweise durch Überladung oder thermische Überlastung über einen Überdruckmechanismus Gas aus ihrem Inneren freisetzt, wird in einem Batteriepack-Gehäuse ein spezieller Freiraum vorgesehen, in den hinein sich das freigesetzte Gas entspannen kann und dabei seine Temperatur und seinen Druck reduzieren kann. Anschließend wird das Gas durch eine Überdruckablassvorrichtung aus dem Inneren des Batteriepack-Gehäuses nach außen freigesetzt. Das Gas durchströmt dabei einen in der Überdruckablassvorrichtung vorgesehenen Partikelabscheider beispielsweise in Form eines Zyklonabscheiders oder eines Oberflächenfilters mit einem Faserverbund oder einer offenporigen schwammartigen Struktur. In dem Gas enthaltene Partikel wie beispielsweise Graphitstaub können dabei beim Durchströmen des Partikelabscheiders herausgefiltert werden, um beispielsweise die Explosionsgefahr durch glühende Partikel innerhalb des austretenden Gases zu verringern.

Die DE 10 2017 213 608 A1 beschreibt einen Gleichstromzyklonabscheider. Bei diesem wird eine Dispersion entlang eines Innengewindes geleitet, um dann in ihre Bestandteile aufgetrennt zu werden.

Zum weiteren Allgemeinen Stand der Technik kann ferner auf die DE 02 57 918 A1 und die DE 198 30 557 A1 verweisen werden, welche Filterelemente für aus einer Blei-Säure-Batterie austretende Gase zeigen.

Der Erfindung liegt die Aufgabe zu Grunde, einen verbesserten Partikelabscheider für Batteriepacks anzugeben. Der Erfindung liegt ferner die Aufgabe zu Grunde, ein verbessertes Batteriegehäuse für Batteriepacks, ein verbessertes Batteriepack sowie ein verbessertes Kraftfahrzeug anzugeben.

Die Aufgabe wird hinsichtlich des Partikelabscheiders erfindungsgemäß durch einen Partikelabscheider mit den Merkmalen des Anspruchs 1 gelöst. Hinsichtlich des Batteriegehäuses, des Batteriepacks und des Kraftfahrzeugs wird die Aufgabe durch die Merkmale des Anspruchs 6, des Anspruchs 7 beziehungsweise des Anspruchs 9 gelöst.

Vorteilhafte Ausgestaltungen der Erfindung sind Gegenstand der Unteransprüche.

Ein Partikelabscheider ist zur Abscheidung von festen Partikeln aus einem Partikel-Batteriegas-Gemisch eingerichtet, und weist einen Einlass auf, der zur Einleitung des Partikel-Batteriegas-Gemischs mit Überdruck eingerichtet ist. Der Partikelabscheider weist einen Auslass auf, der zur Entspannung des Batteriegases eingerichtet ist.

Erfindungsgemäß weist der Partikelabscheider einen Gaskanal auf, der entlang einer axialen Richtung schraubenförmig gewunden ist und der den Einlass mit dem Auslass fluidisch verbindet. Am auslassseitigen Ende weist der Partikelabscheider einen Partikelauswurf auf, der in einer radialen, das heißt: zur axialen Richtung senkrechten, Richtung geöffnet ist und zum Durchlass von Partikeln eingerichtet ist.

Vorteilhaft wird durch die Abscheidung der Partikel von dem Batteriegas dessen Zündwahrscheinlichkeit verringert. Insbesondere wird verhindert, dass bei einer thermischen Überlastung einer Batteriezelle freigesetzte glühende Partikel, beispielsweise Graphit- oder Metallpartikel, das Batteriegas beim Austritt an die Umgebung entzünden.

Herkömmliche Partikel-Batteriegas-Abscheider trennen das Partikel-Batteriegas-Gemisch durch Beschleunigung, wobei, aufgrund ihrer größeren Trägheit, die schwereren Partikel weniger schnell abgeleitet werden als das leichtere Batteriegas. Dabei sinken die Partikel irgendwo entlang der Beschleunigungsstrecke zu Boden.

Demgegenüber weist der vorgeschlagene Partikelabscheider den Vorteil auf, dass die Partikel mit dem Batteriegas gemeinsam durch den schraubenförmigen Gaskanal geleitet werden und zusätzlich zu der axialen, in Längsrichtung des schraubenförmigen Gaskanals weisenden linearen Geschwindigkeitskomponente eine Winkelgeschwindigkeitskomponente, die tangential zur Schraubenform des Gaskanals gerichtet ist und die eine Zentrifugalkraft auf das bewegte Partikel-Batteriegasgemisch bewirkt. Unter dem Einfluss der Zentrifugalkraft werden die schwereren Partikel radial nach außen, also: senkrecht zur linearen Geschwindigkeitskomponente und senkrecht zur Winkelgeschwindigkeitskomponente, bewegt und verdrängen dabei das leichtere Batteriegas radial nach innen.

Durch die radiale Öffnung des Partikelauswurfs treten die Partikel an dieser Stelle aus und können zentral gesammelt und aufgenommen werden, während das Batteriegas im Wesentlichen ungebremst in axialer Richtung ausströmen und entspannen kann. In vorteilhafter Weise ist der Strömungswiderstand des vorgeschlagenen Partikelabscheiders gegenüber den Lösungen aus dem Stand der Technik vermindert. Dadurch ist ein besonders effizienter Druckabbau eines unter Überdruck durch den Partikelabscheider ausgelassenen Partikel-Batteriegasgemischs möglich.

Erfindungsgemäß ist der Gaskanal durch eine in einem Steigrohr angeordnete Schnecke gebildet. Die Schnecke weist eine Schneckenwendel auf, die um eine axiale, das heißt: in Längsrichtung des Steigrohrs erstreckte, Schneckenachse gewunden ist.

Das Steigrohr weist einen radial nach innen zur Schneckenachse zu vorspringenden, in axialer Längsrichtung gewundenen Zug auf. Der Zug ist korrespondierend zur Schneckenwendel gewunden.

Das Steigrohr ist einlassseitig mit einer Siebplatte gasdurchlässig verschlossen und auslassseitig in einer Auslasstrompete trichterförmig geweitet. Der Partikelauswurf ist als radialer Schlitz im Mantel des Steigrohrs im Bereich der Auslasstrompete angeordnet.

Mittels der Schneckenwendel und dem korrespondierend gewundenen Zug kann in sehr einfacher Weise ein schraubenförmiger Gaskanal gebildet werden. Schnecke und Steigrohr können voneinander demontierbar ausgebildet sein. Dadurch sind eine einfache und kostengünstige Herstellung und Montage möglich. Zudem bietet die Ausführung des schraubenförmigen Gaskanals mittels einer Schnecke den Vorteil, dass ein besonders großer lichter Innendurchmesser des Steigrohres für die Durchleitung des Partikel-Batteriegasgemischs verfügbar ist, so dass ein besonders guter Druckabbau über den Partikelabscheider ermöglicht ist.

In einer Ausführungsform weisen die Schneckenwendel und der Zug an der Innenseite des Steigrohrmantels jeweils näherungsweise drei Windungen auf. Eine Vergrößerung der Windungsanzahl der Schneckenwendel bewirkt eine Vergrößerung der Radialbeschleunigung, und somit auch eine verbesserte Trennung der Partikel von dem Batteriegas, wobei jedoch der Grad der Verbesserung durch eine zusätzliche Windung mit länger werdender Schneckenwendel allmählich abnimmt. Eine Anzahl von näherungsweise drei Windungen hat sich als optimaler Kompromiss zwischen einer guten Trennwirkung des Partikelabscheiders und den primär durch dessen axiale Länge bedingten Anforderungen an den Bauraum herausgestellt.

Bei einer Ausführungsform ist der Partikelauswurf über eine volle Wendelhöhe der Schneckenwendel erstreckt und radial geöffnet. Dadurch lässt sich ein möglichst vollständiges Ausschleudern der radial nach außen gedrängten Partikel und somit eine besonders gute Trennwirkung des Partikelabscheiders erzielen.

Bei einer Ausführungsform ist die Siebplatte für das Zurückhalten von Partikeln mit einem Querschnitt von mindestens 1,5 Millimeter eingerichtet. Das Zurückhalten von größeren, somit auch schwereren und trägeren Partikeln, erlaubt eine kürzere Bauform des Partikelabscheiders und einen verbesserten Durchlass des Partikel-Batteriegasgemischs. Zugleich erlauben ausreichend große Sieböffnungen einen geringen Strömungswiderstand und damit einen effizienten Überdruckabbau durch den Partikelabscheider. Sieböffnungen mit einem Querschnitt von etwa 1,5 Millimeter haben sich als guter Kompromiss zwischen einer guten Trennwirkung und einem geringen Strömungswiderstand herausgestellt.

Ein Batteriegehäuse ist zur gasdichten Kapselung mindestens eines Batteriemoduls eingerichtet und umfasst eine Isoliereinlage mit mindestens einem darin angeordneten Durchbruch, der zur fluidischen Verbindung des Innenraums des Batteriegehäuses (2) mit dessen Umgebung oberhalb eines vorbestimmten Überdruckgrenzwertes im Innenraum eingerichtet ist.

In dem mindestens einen Durchbruch ist ein erfindungsgemäßer Partikelabscheider angeordnet. In der Isoliereinlage ist mindestens eine Abscheidekammer ausgespart, die fluidisch mit dem Partikelauswurf des mindestens einen Partikelabscheiders verbunden ist.

Nach einer thermischen Überlastung einer Batteriezelle des mindestens einen Batteriemoduls wird gebildetes Partikel-Batteriegas-Gemisch, wenn der vorbestimmte Überdruckgrenzwert überschritten ist, durch den Partikelabscheider ausgeleitet. Dabei werden möglicherweise noch glühende Partikel, die in die Umgebung austretendes Batteriegas entzünden könnten, durch den Partikelauswurf in die strömungsberuhigte Abscheidekammer geleitet. Somit wird die Wahrscheinlichkeit für eine Entzündung des austretenden Batteriegases signifikant verringert.

Ein Batteriepack umfasst ein erfindungsgemäßes Batteriegehäuse mit dem erfindungsgemäßen Partikelabscheider, wobei in dem Batteriegehäuse mindestens ein Batteriemodul gekapselt ist. Durch die Hemmung der Entzündung von im thermischen Überlastfall austretendem Batteriegas kann die Betriebssicherheit derartiger Batteriepacks verbessert werden.

In einer Ausführungsform umfasst das mindestens eine Batteriemodul mindestens eine Lithium-lonen-Batteriezelle. Lithium-lonen-Batteriezellen weisen eine hohe Energiedichte und eine lange Lebensdauer auf und emittieren im thermischen Überlastfall ein Partikel-Batteriegas-Gemisch, dessen Entzündungswahrscheinlichkeit mit dem erfindungsgemäßen Partikelabscheider wirksam reduziert werden kann.

Ferner wird ein Kraftfahrzeug, vorzugsweise ein Elektrofahrzeug, vorgeschlagen, das mindestens teilweise mit einem solchen Batteriepack betrieben und/oder gespeist wird. Ein solches Kraftfahrzeug weist eine besonders hohe Betriebssicherheit auf. Insbesondere genügt ein derart ausgebildetes Elektrofahrzeug geltenden gesetzlichen, regulatorischen und/oder normativen Sicherheitsvorschriften hinsichtlich der Zeitspanne zwischen dem Feststellen einer thermischen Überlastung und dem Einsetzen eines Batteriebrandes.

Ausführungsbeispiele der Erfindung werden im Folgenden anhand von Zeichnungen näher erläutert.

Dabei zeigen:
- Fig. 1: schematisch einen Querschnitt durch ein Batteriepack,
- Fig. 2: schematisch eine einlassseitige perspektivische Ansicht auf eine Isoliereinlage,
- Fig. 3: schematisch eine auslassseitige perspektivische Ansicht auf eine Isoliereinlage,
- Fig. 4: schematisch eine perspektivische Ansicht auf einen Axialabscheider,
- Fig. 5: schematisch eine perspektivische Ansicht auf einen demontierten Axialabscheider mit Steigrohr und Schnecke,
- Fig. 6: schematisch eine perspektivische Detailansicht auf ein Steigrohr,
- Fig. 7: schematisch eine auslassseitige Ansicht auf einen Axialabscheider und
- Fig. 8: Ergebnis einer Computer-Simulation mit achthundert Partikel, wobei der Axialabscheider "auf dem Kopf" steht.

Einander entsprechende Teile sind in allen Figuren mit den gleichen Bezugszeichen versehen.

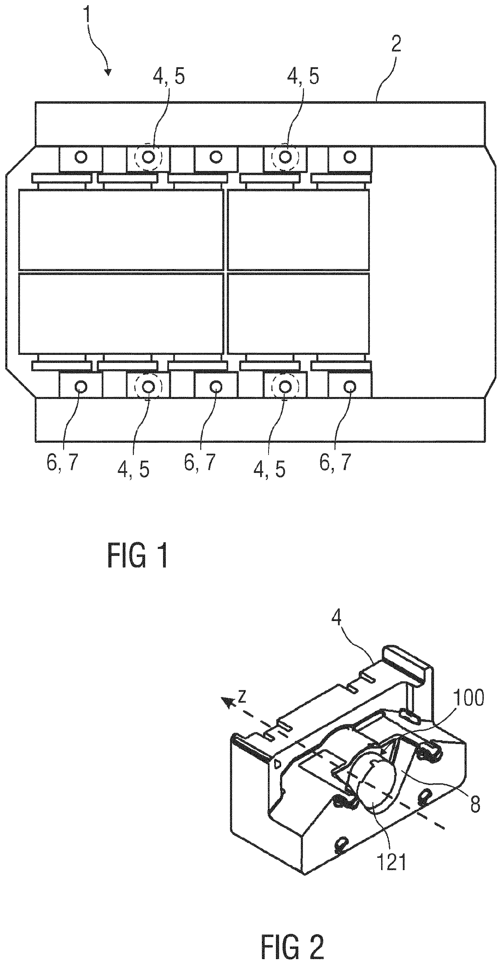

Fig. 1 zeigt einen schematischen Querschnitt durch ein Batteriepack 1 mit einem Batteriegehäuse 2. Das Batteriegehäuse 2 ist gasdicht ausgebildet. Im Inneren des Batteriegehäuses 2 sind Batteriemodule 3 angeordnet.

Bei einer Beschädigung des Batteriepacks 1 oder eines Batteriemoduls 3 ist es möglich, dass Batteriegase gebildet werden, die zur Vermeidung einer Explosion des Batteriepacks 1 kontrolliert an die Umgebung abgeführt werden müssen. Die Ausleitung von Batteriegasen aus dem Batteriegehäuse 2 erfolgt entlang von Isoliereinlagen 4.

Die Isoliereinlagen 4 weisen nachfolgend noch näher erläuterte, für die Batteriegasausleitung eingerichtete Durchbrüche 5 zwischen dem Inneren des Batteriegehäuses 2 und dessen Umgebung auf, die durch jeweils eine Berstscheibe 6 und/oder ein Berstventil 7 gasdicht abgeschlossen sind. Erreicht ein Überdruck im Inneren des Batteriegehäuses 2 einen vorbestimmten Grenzwert, so birst die Berstscheibe 6 und/oder öffnet das Berstventil 7. Damit ist die Entspannung des unter Überdruck stehenden Batteriegases durch die Isoliereinlage 4 hindurch möglich.

Fig. 2 zeigt schematisch eine perspektivische Ansicht auf eine Isoliereinlage 4 aus Sicht des Gehäuseinneren des Batteriegehäuses 2. Bei geborstener Berstscheibe 6 oder geöffnetem Berstventil 7 werden Batteriegase durch einen Axialabscheider 100 von einem Einlass 8 entlang einer axialen Richtung z in die äußere Umgebung des Batteriegehäuses 2 abgeleitet. Der Axialabscheider 100 ist in dem zylindrischen Durchbruch 5 durch die Isoliereinlage 4 angeordnet. Einlassseitig ist der Axialabscheider 100 über eine Siebplatte 121 abgeschlossen. Die Anordnung und Funktionsweise der Siebplatte 121 wird nachfolgend noch näher erläutert.

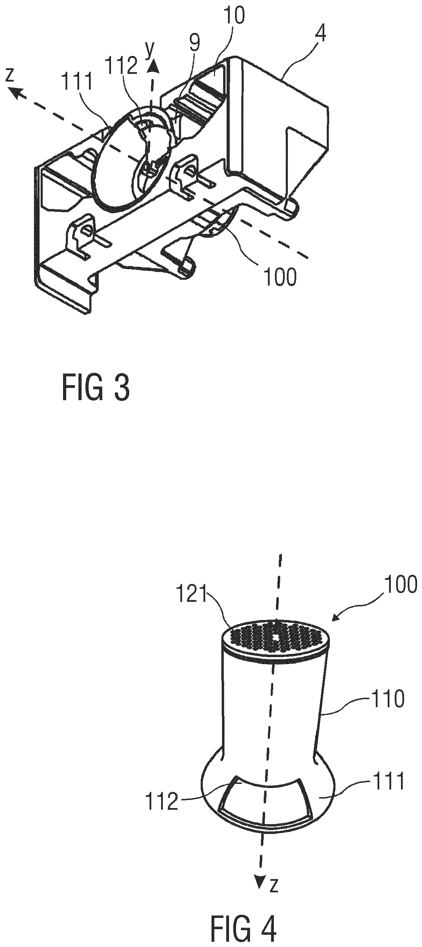

Fig. 3 zeigt schematisch eine perspektivische Ansicht auf die Isoliereinlage 4 aus der gegenüberliegenden Sicht, das heißt: von der Umgebung des Batteriegehäuses 2 aus. Auslassseitig weist der Axialabscheider 100 eine trompetenartig geweitete Auslasstrompete 111 auf, über die austretendes Batteriegas an die Umgebung abgegeben wird.

In der Auslasstrompete 111 ist ein radialer, schlitzförmiger Partikelauswurf 112 ausgespart. Der Partikelauswurf 112 ist für den Auswurf fester Partikel vorgesehen, die vom austretenden Batteriegas mitgeführt werden und klein genug sind, um die einlassseitige Siebplatte 121 zu passieren.

Die Partikel werden, wie nachfolgend noch genauer erläutert, in einer radialen Richtung y durch den Partikelauswurf 112 geleitet, während das Batteriegas in axialer Richtung z ausströmt. Die ausgeworfenen Partikel werden über einen Partikelkanal 9, der als fluidische Verbindung zwischen dem Partikelauswurf 112 und einer Abscheidekammer 10 ausgebildet ist, in die Abscheidekammer 10 geleitet, die in der Isoliereinlage 4 ausgespart ist.

Fig. 4 zeigt den Axialabscheider 100 in einer äußeren perspektivischen Ansicht. Der Axialabscheider 100 wird entlang der axialen Richtung z von Batteriegas durchströmt, das an einem einlassseitigen, mit der Siebplatte 121 abgeschlossenen Ende vom Batteriegehäuse 2 einströmt und an einem auslassseitigen, mit der Auslasstrompete 111 abgeschlossenen Ende ausströmt.

Zwischen der Siebplatte 121 und der Auslasstrompete 111 ist ein zylindrisches, hohles Steigrohr 110 angeordnet, das im Inneren eine in Fig. 4 nicht sichtbare Schnecke 120 aufnimmt. Am Ansatz der Auslasstrompete 111 an dem Steigrohr 110 ist im Mantel des Axialabscheiders 100 der Partikelauswurf 112 ausgespart. Der Partikelauswurf 112 erstreckt sich als länglicher Schlitz entlang des Umfangs des Axialabscheiders 100 über eine Länge von etwa einem Drittel bis einem Sechstel des Gesamtumfangs.

Über die Länge des Partikelauswurfs 112 ist der äußere Umfang der Auslasstrompete 111 zurückgenommen und stärker gewölbt als der übrige Bereich der Auslasstrompete 111.

Der Axialabscheider 100 ist vorzugsweise aus einem leichten, hoch wärme- und druckbeständigen Material gefertigt. Hier kommen u.a. Phenol-Formaldehyd-Harze wie z.B. Bakelite^{®} PF 1110 in Frage.

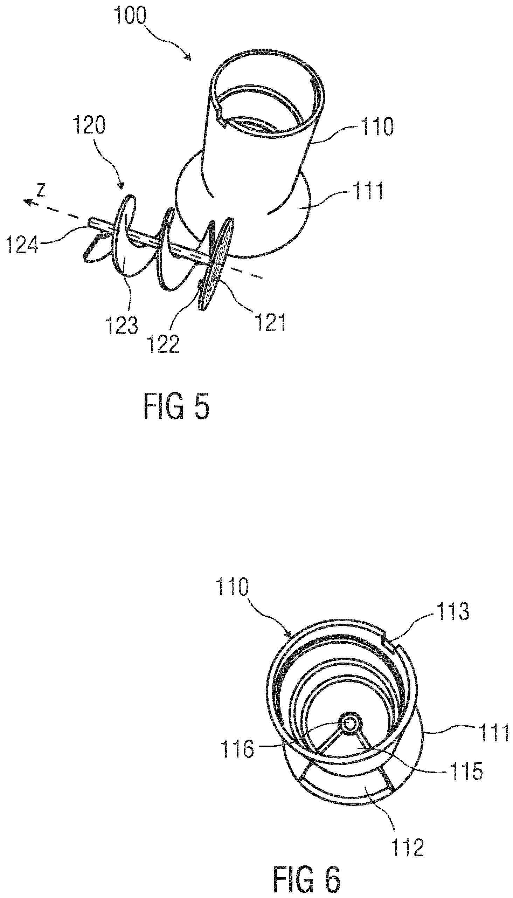

Fig. 5 zeigt den Axialabscheider 100 in demontiertem Zustand, das heißt: mit entnommener Schnecke 120. Am einlassseitigen Ende des Steigrohres 110 ist in axialer Richtung eine Arretiernut 113 ausgespart, die korrespondierend zu einer in radialer Richtung y von der Siebplatte 121 vorspringenden Arretiernase 122 ausgebildet ist.

Die entnommene Schnecke 120 umfasst eine Schneckenwendel 123 mit einer in Längsrichtung der Schnecke 120, das heißt: in axialer Richtung z, erstreckten Schneckenachse 124. Vorliegend weist die Schneckenwendel 123 etwa 2,5 volle Windungen auf. Es ist aber auch möglich, dass die Schneckenwendel 123 eine andere Windungszahl aufweist. Vorzugsweise weist die Schneckenwendel 123 näherungsweise drei Windungen bei einer axialen Ausdehnung von etwa 100 bis 120 mm auf.

Am einlassseitigen Ende ist die Schneckenachse 124 fest mit der senkrecht darauf angeordneten Siebplatte 121 verbunden. In montiertem Zustand rastet die Arretiernase 122 der Siebplatte 121 in der Arretiernut 113 des Steigrohres 110 ein. Dadurch sind die Schnecke 120 und das Steigrohr 110 mit dem Partikelauswurf 112 in montiertem Zustand drehfest gegeneinander fixiert.

Am auslassseitigen Ende springt die Schneckenachse 124 axial über die Schnecke 120 hinaus vor.

Fig. 6 zeigt das Steigrohr 110 in einer Ansicht vom einlassseitigen, das heißt: der Auslasstrompete 111 gegenüberliegenden Ende her. Auf der Innenwand des Steigrohrs 110 ist ein schraubenförmiger Zug 114 angeordnet. Der schraubenförmige Zug 114 springt radial nach innen gerichtet von der Innenwand des Steigrohrs 110 vor. Die Windung des Zugs 114 ist in Richtung und Steigung gleich der Windung der Schneckenwendel 123 der Schnecke 120 ausgebildet. In der arretierten Einbauposition, das heißt: mit in der Arretiernut 113 eingerasteten Arretiernase 122 der Siebplatte 121, liegen sich die Schneckenwendel 123 und der Zug 114 in radialer Richtung y direkt gegenüber.

Am auslassseitigen Ende der Auslasstrompete 111 ist eine kreissegmentförmige Lasche 115 angeordnet, die radial nach innen bis zur Mitte des Steigrohrs 110 vorspringt und spitz zuläuft. Am spitz zulaufenden inneren Ende der Lasche 115 ist ein Schneckenlager 116 angeordnet, das eine Bohrung zur Aufnahme des auslassseitig vorragenden Endes der Schneckenachse 124 aufweist.

Der äußere Kreisbogen der kreissegmentförmigen Lasche 115 ist mit dem auslassseitigen Ende des Mantels der Austrittstrompete 111 verbunden und erstreckt sich am Mantel der Austrittstrompete 111 näherungsweise über den gleichen Winkelbereich (oder Umfangsteil) wie der Partikelauswurf 112. Mit anderen Worten: der Partikelauswurf 112 und die Lasche 115 sind in axialer Richtung z fluchtend angeordnet. Die Austrittstrompete 111 ist somit im Bereich der Lasche 115, das heißt: auslassseitig des Partikelauswurfs 112, abgedeckt.

Das an der Lasche 115 angeordnete Schneckenlager 116 bewirkt zusammen mit der Arretiernut 113 die beidseitige, drehfeste Aufnahme der Schnecke 120 im Steigrohr 110. Ferner bewirkt die Lasche 115, da sie der axialen Strömung einen Widerstand entgegensetzt, einen in dem Bereich zwischen der Lasche 115 und dem Partikelauswurf 112 lokal erhöhten Strömungsdruck des ausströmenden Batteriegases.

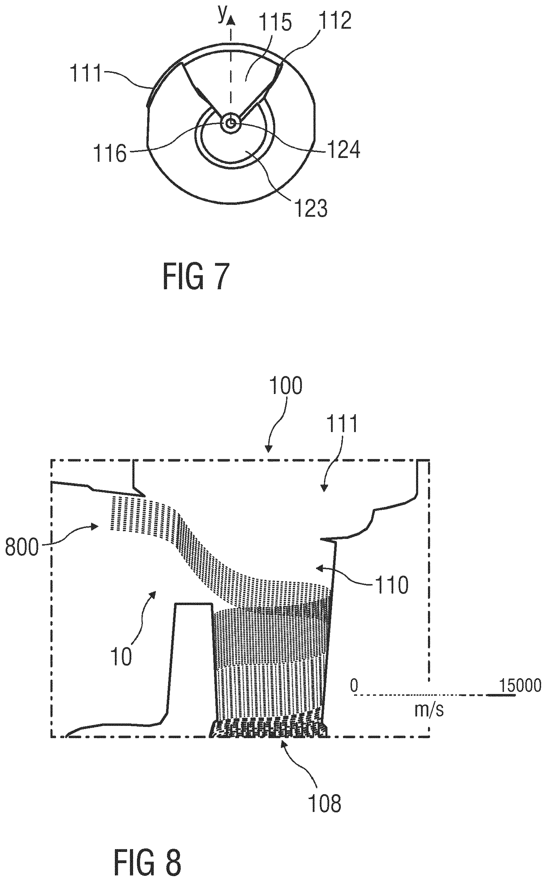

Fig. 7 zeigt eine auslassseitige Draufsicht auf das Steigrohr 110 mit angesetzter Auslasstrompete 111 und eingesetzter Schnecke 120.

Nachfolgend wird die Funktionsweise des Axialabscheiders 100 erläutert. Bei einer thermischen Überlastung können Batteriemodule 3 bersten und dabei Batteriegas und heiße Partikel, beispielsweise Graphit- oder Metallpartikel freisetzen, die ein zündfähiges Gemisch bilden können. Der vorgeschlagene Axialabscheider 100 trennt die Partikel vom ausströmenden Batteriegas und verringert so die Wahrscheinlichkeit für eine Zündung des Gemisches.

Durch die Siebplatte 121 werden größere Partikel des Partikel-Batteriegas-Gemischs vom Eintritt in den Axialabscheider 100 abgehalten und verbleiben somit im Inneren des Batteriegehäuses 2. Die Lochgröße der Siebplatte 121 wird vorzugsweise so gewählt, dass Partikel mit einem Durchmesser von 1,5 Millimeter oder größer abgehalten werden.

Batteriegas und Partikel, deren Durchmesser kleiner als die Lochgröße der Siebplatte 121 ist, treten in den Axialabscheider 100 ein und werden durch die Schneckenwendel 123 und den am Rand des Steigrohrs 110 gegenüberliegenden, korrespondierend ausgebildeten Zug 114 auf einer schraubenförmigen Bahn in axialer Richtung z durch den Axialabscheider 100 geleitet.

Die schraubenförmige Führung des Partikel-Batteriegas-Gemischs bewirkt Verwirbelungen auch auf der Einlassseite der Siebplatte 121. Dadurch werden abgeschiedene große Partikel von der Siebplatte 121 weggeführt oder verweht und ein Verstopfen der Siebplatte 121 vermieden.

Die Siebplatte 121 kann zudem konvex gewölbt ausgebildet sein, was das Wegführen oder Verwehen der darauf abgeschiedenen, großen Partikel unterstützt.

Ferner bewirkt die erzwungene schraubenförmige Strömung des Partikel-Batteriegas-Gemischs dessen Entmischung, wobei sich unter dem Einfluss der Zentrifugalkraft die schwereren Partikel radial nach außen, also: auf die Innenwand des Steigrohrs 110 zu, bewegen und dabei das leichtere Batteriegas radial nach innen, also: auf die Schneckenachse 124 zu verdrängen. Diese radiale Entmischung nimmt in axialer Richtung z zu und erreicht in der Auslasstrompete 111 die größte Trennung zwischen Partikeln, die an der Innenwand der Auslasstrompete 111 strömen, und dem Batteriegas, das ins Innere der Auslasstrompete 111 verdrängt wird.

Die in radiale Richtung y wirkende Zentrifugalkraft bewirkt zugleich das radiale Austreten der Partikel durch den schlitzförmigen Partikelauswurf 112, wie in Fig. 7 schematisch dargestellt. Das Austreten der Partikel wird durch den mittels der Lasche 115 erhöhten Strömungsdruck am Partikelauswurf 112 unterstützt.

Die ausgetretenen Partikel werden durch den Partikelkanal 9 in den strömungsberuhigten Bereich der Abscheidekammer 10 gedrückt und dort gesammelt. Das auf diese Weise geklärte, nur noch sehr kleine und leichte Partikel mit Durchmessern von typischerweise zwischen 10 Mikrometer und 100 Mikrometer enthaltende Batteriegasgemisch wird über die Auslasstrompete 111 entspannt, passiert die nachgeordnete Berstscheibe 6 und/oder das nachgeordnete Berstventil 7 und wird an die Umgebung des Batteriegehäuses 2 abgegeben. Da die Glühzeit der Partikel mit deren Größe abnimmt, sind die noch enthaltenen sehr kleinen und leichten Partikel beim Austritt in die Umgebung verglüht und können das Batteriegas nicht mehr entzünden.

Es hat sich herausgestellt, dass die Zeitspanne zwischen einer thermischen Überlastung eines Batteriemoduls 3, ausgelöst beispielsweise durch Eintreiben eines metallischen Nagels in ein Batteriepack 1, und einem Batteriebrand erhöht werden kann, wenn das Batteriegas über den erfindungsgemäßen Axialabscheider 100 aus dem Batteriegehäuse 2 geführt wird. So wurde beispielsweise bei Vortests ohne den erfindungsgemäßen Partikelabscheider eine Entzündung des Batteriegases durch Partikel innerhalb von weniger als fünf Minuten festgestellt. Bei Tests mit dem erfindungsgemäßen Partikelabscheider wurde dagegen niemals eine Entzündung des Batteriegases durch Partikel festgestellt. Stattdessen fand die Entzündung des Batteriegases immer nach mehr als 5 Minuten durch andere Zündquellen wie z.B. HV-Überschläge statt. Damit steht für die Warnung eines Nutzers, beispielsweise eines Fahrzeuginsassen eines Elektrofahrzeugs, das mit derartigen Batteriepacks 1 gespeist wird, eine vergrößerte Zeitspanne zur Verfügung, welche den gesetzlichen Vorschriften und Normen entspricht. Ein Vorteil der Erfindung besteht somit in der verbesserten Anwendungssicherheit und dem erweiterten Einsatzbereich von Batteriepacks 1, die mit dem vorgeschlagenen Axialabscheider 100 versehen sind.

Herkömmliche Partikel-Batteriegas-Abscheider trennen das Partikel-Batteriegas-Gemisch durch Beschleunigung, wobei, aufgrund ihrer größeren Trägheit, die schwereren Partikel weniger schnell abgeleitet werden als das leichtere Batteriegas. Dabei sinken die Partikel irgendwo entlang der Beschleunigungsstrecke zu Boden. Ein Vorteil der Erfindung besteht demgegenüber darin, dass die Partikel in einem gekapselten Bereich, der Abscheidekammer 10, gesammelt und endgelagert werden, welcher leicht gegen die Entstehung oder Ausbreitung eines Brandes gesichert werden kann.

Um die Wirksamkeit des Axialabscheiders 100 zu testen, wurden Computer-Simulationen durchgeführt. Hierfür wurde die Software StarCCM+ eingesetzt und 3D Euler-Lagrange Gas-Partikel-Simulationen durchgeführt.

Folgende Rahmenbedingungen wurden bei der Computer-Simulation angenommen: Stationäre Simulation, Gasmassenflussrate 25 g/s, Gaseintrittstemperatur 300 °C (Worst-Case-Szenario), Wandtemperatur adiabatisch, Partikelanfangstemperatur 1000 °C, Partikelmaterial Graphit und NMC (Lithium-Nickel-Mangan-Kobalt-Oxid) und Kupfer, Partikelform sphärisch.

Folgende Ergebnisse wurden bei der Computer-Simulation erhalten: Druckabfall im Axialabscheider 100 340 mbar, maximale Machzahl 0.54, Abscheiderate für Partikel mit einem Durchmesser von 50 bis 1000 µm 100 %.

Fig. 8 illustriert das Ergebnis einer solchen Computer-Simulation mit achthundert Partikeln schematisch. In der Darstellung ist der Axialabscheider 100 ausschnittsweise gezeigt. Der Axialabscheider 100 steht dabei "auf dem Kopf", d.h. die Auslasstrompete 111 ist oben angeordnet, darunter befindet sich das Steigrohr 110 und darunter der Einlass 8. Links daneben befindet sich die Abscheidekammer 10. Der Weg der Partikel ist in Form einer Mehrzahl von Linien (Trajektorien 800) dargestellt, welche schematisch die insgesamt achthundert in der Euler-Lagrange Gas-Partikel-Simulationen simulierten Trajektorien verdeutlichen. Der Darstellung ist zu entnehmen, wie die Partikel mit relativ geringer Geschwindigkeit von unter 3.000 m/s "von unten" in den Axialabscheider 100 eintreten, dann beim Durchströmen des schraubenförmig gewundenen Gaskanals in z-Richtung "nach oben" auf über 12.000 m/s beschleunigt werden und schließlich in y-Richtung aus dem Axialabscheider 100 aus- und in die Abscheidekammer 10 eintreten, wo sie abrupt abgebremst werden und letztendlich zum Stillstand kommen, d.h.: abgelagert werden. Wie oben bereits erwähnt, beträgt die Abscheiderate für Partikel mit einem Durchmesser von 50 bis 1000 µm 100 %.

Bezüglich der Einbaulage des Axialabscheiders 100 im Kraftfahrzeug ist anzumerken, dass diese beliebig sein kann, d.h.: der Axialabscheider kann prinzipiell jede räumliche Orientierung im Kraftfahrzeug einnehmen. Dabei gilt jedoch die Einschränkung, dass bei der Einbaulage sichergestellt sein muss, dass die in der Abscheidekammer 10 abgelagerten Partikel nicht wieder durch den schlitzförmigen Partikelauswurf 112 zurück in den Axialabscheider fallen. Die dadurch nahezu beliebige Einbaulage bedeutet eine Verbesserung der Designfreiheit im Sinne einer flexiblen Ausnutzung des im Kraftfahrzeug zur Verfügung stehenden, knappen Bauraums.

### Bezugszeichenliste

- 1: Batteriepack
- 2: Batteriegehäuse
- 3: Batteriemodul
- 4: Isoliereinlage
- 5: Durchbruch
- 6: Berstscheibe
- 7: Berstventil
- 8: Einlass
- 9: Partikelkanal
- 10: Abscheidekammer
- 100: Axialabscheider, Partikelabscheider
- 110: Steigrohr
- 111: Auslasstrompete, Auslass
- 112: Partikelauswurf
- 113: Arretiernut
- 114: Zug
- 115: Lasche
- 116: Schneckenlager
- 120: Schnecke
- 121: Siebplatte
- 122: Arretiernase
- 123: Schneckenwendel
- 124: Schneckenachse
- z: axiale Richtung
- y: radiale Richtung

## Patentansprüche

1. Partikelabscheider (100), der zur Abscheidung von festen Partikeln aus einem an einem Einlass (8) mit Überdruck eingeleiteten Partikel-Batteriegas-Gemisch und zur Entspannung des Batteriegases an einem Auslass (111) eingerichtet ist,
**dadurch gekennzeichnet, dass** der Partikelabscheider (100) einen schraubenförmig entlang einer axialen Richtung (z) gewundenen Gaskanal aufweist, der den Einlass (8) mit dem Auslass (111) fluidisch verbindet, wobei der Gaskanal am auslassseitigen Ende einen Partikelauswurf (112) aufweist, der in einer radialen Richtung (y) geöffnet und zum Durchlass von Partikeln eingerichtet ist,
**dadurch gekennzeichnet, dass**
der Gaskanal durch eine in einem Steigrohr (110) angeordnete Schnecke (120) mit einer um eine axiale Schneckenachse (124) gewundene Schneckenwendel (123) gebildet ist, wobei das Steigrohr (110) einen radial nach innen vorspringenden, korrespondierend zur Schneckenwendel (123) gewundenen Zug (114) aufweist, wobei das Steigrohr (110) einlassseitig mit einer Siebplatte (121) gasdurchlässig verschlossen ist und auslassseitig in einer Auslasstrompete (111) trichterförmig geweitet ist und wobei der Partikelauswurf (112) als radialer Schlitz im Mantel des Steigrohrs (110) im Bereich der Auslasstrompete (111) angeordnet ist.

2. Partikelabscheider (100) nach Anspruch 1,
**dadurch gekennzeichnet, dass** die Schneckenwendel (123) und der Zug (114) jeweils drei Windungen aufweisen.

3. Partikelabscheider (100) nach Anspruch 1 oder 2,
**dadurch gekennzeichnet, dass** der Partikelauswurf (112) über eine volle Wendelhöhe der Schneckenwendel (123) erstreckt ausgebildet und radial geöffnet ist.

4. Partikelabscheider (100) nach einem der Ansprüche 1 bis 3,
**dadurch gekennzeichnet, dass** die Siebplatte (121) für das Zurückhalten von Partikeln mit einem Querschnitt von mindestens 1,5 Millimetern eingerichtet ist.

5. Partikelabscheider (100) nach einem der Ansprüche 1 bis 4,
**dadurch gekennzeichnet, dass** die Siebplatte (121) konvex gewölbt ausgebildet ist.

6. Batteriegehäuse (2), das zur gasdichten Kapselung mindestens eines Batteriemoduls (3) eingerichtet ist, umfassend eine Isoliereinlage (4) mit mindestens einem darin angeordneten Durchbruch (5), der zur fluidischen Verbindung des Innenraums des Batteriegehäuses (2) mit dessen Umgebung oberhalb eines vorbestimmten Überdruckgrenzwertes im Innenraum eingerichtet ist,
**dadurch gekennzeichnet, dass** in dem mindestens einen Durchbruch (5) ein Partikelabscheider (100) nach einem der vorhergehenden Ansprüche angeordnet ist und in der Isoliereinlage (4) mindestens eine Abscheidekammer (10) ausgespart ist, die fluidisch mit dem Partikelauswurf (112) des mindestens einen Partikelabscheiders (100) verbunden ist.

7. Batteriepack (1) umfassend ein Batteriegehäuse (2) nach Anspruch 6 mit mindestens einem in dem Batteriegehäuse (2) gekapselten Batteriemodul (3).

8. Batteriepack (1) nach Anspruch 7,
**dadurch gekennzeichnet, dass** das mindestens eine Batteriemodul (3) mindestens eine Lithium-lonen-Batteriezelle umfasst.

9. Kraftfahrzeug mit einem Batteriepack (1) nach Anspruch 7 oder 8, das zur Speisung und/oder zum Betrieb des Kraftfahrzeugs eingerichtet ist.

## Claims

1. Particle separator (100) which is designed to separate solid particles from a particle-battery-gas mixture introduced at overpressure at an inlet (8) and to release the battery gas at an outlet (111),
**characterized in that** the particle separator (100) comprises a gas channel wound helically in an axial direction (z), which gas channel fluidically connects the inlet (8) to the outlet (111), the gas channel having a particle ejector (112) at the outlet end, which particle ejector is open in a radial direction (y) and is designed to allow particles to pass through,
**characterized in that**
the gas channel is formed by a screw (120) arranged in a riser pipe (110), the screw having a screw helix (123) wound around an axial screw spindle (124), the riser pipe (110) having a radially inwardly projecting thread (114) wound so as to correspond to the screw helix (123), the riser pipe (110) being gas-permeably closed on the inlet side by means of a sieve plate (121) and being widened in a funnel shape on the outlet side in an outlet trumpet (111), and the particle ejector (112) being arranged as a radial slot in the casing of the riser pipe (110) in the region of the outlet trumpet (111).

2. Particle separator (100) according to claim 1,
**characterized in that** the screw helix (123) and the thread (114) each have three turns.

3. Particle separator (100) according to either claim 1 or 2,
**characterized in that** the particle ejector (112) extends over a full helix height of the screw helix (123) and is radially open.

4. Particle separator (100) according to any of claims 1 to 3,
**characterized in that the** sieve plate (121) is designed to retain particles which have a cross-section of at least 1.5 millimeters.

5. Particle separator (100) according to any of claims 1 to 4,
**characterized in that** the sieve plate (121) is convexly curved.

6. Battery housing (2), which is designed for gas-tight encapsulation of at least one battery module (3) and comprises an insulating insert (4) having at least one aperture (5) arranged therein which is designed for fluidically connecting the interior of the battery housing (2) to its surroundings above a predetermined overpressure limit value in the interior,
**characterized in that** a particle separator (100) according to any of the preceding claims is arranged in the at least one aperture (5) and at least one separation chamber (10) is recessed in the insulating insert (4) which is fluidically connected to the particle ejector (112) of the at least one particle separator (100).

7. Battery pack (1) comprising a battery housing (2) according to claim 6, comprising at least one battery module (3) encapsulated in the battery housing (2).

8. Battery pack (1) according to claim 7,
**characterized in that** the at least one battery module (3) comprises at least one lithium-ion battery cell.

9. Motor vehicle comprising a battery pack (1) according to either claim 7 or 8, which battery pack is designed to supply and/or to operate the motor vehicle.

## Revendications

1. Séparateur de particules (100) conçu pour la séparation de particules solides d'un mélange de particules et de gaz de batterie introduit à une surpression au niveau d'une entrée (8) et pour la détente du gaz de batterie au niveau d'une sortie (111),
**caractérisé en ce que** le séparateur de particules (100) présente un canal à gaz enroulé de manière hélicoïdale le long d'une direction axiale (z), lequel canal à gaz relie fluidiquement l'entrée (8) à la sortie (111), le canal à gaz présentant au niveau de l'extrémité côté sortie un éjecteur de particules (112) qui est ouvert dans une direction radiale (y) et qui est conçu pour le passage de particules,
**caractérisé en ce que**
le canal à gaz est formé par une vis sans fin (120) agencée dans un tuyau ascendant (110) et comportant une hélice de vis sans fin (123) enroulée autour d'un axe de vis sans fin axial (124), le tuyau ascendant (110) présentant un renfoncement (114) faisant saillie radialement vers l'intérieur et enroulé en correspondance avec l'hélice de vis sans fin (123), le tuyau ascendant (110) étant fermé côté entrée par une plaque perforée (121) de manière perméable aux gaz et étant élargi côté sortie en forme d'entonnoir en une trompette de sortie (111) et l'éjecteur de particules (112) étant agencé sous forme de fente radiale dans l'enveloppe du tuyau ascendant (110) dans la zone de la trompette de sortie (111).

2. Séparateur de particules (100) selon la revendication 1,
**caractérisé en ce que** l'hélice de vis sans fin (123) et le renfoncement (114) présentent respectivement trois enroulements.

3. Séparateur de particules (100) selon la revendication 1 ou 2,
**caractérisé en ce que** l'éjecteur de particules (112) est réalisé en s'étendant sur toute une hauteur d'hélice de l'hélice de vis sans fin (123) et est ouvert radialement.

4. Séparateur de particules (100) selon l'une des revendications 1 à 3,
**caractérisé en ce que** la plaque perforée (121) est conçue pour la rétention de particules avec une section transversale d'au moins 1,5 millimètre.

5. Séparateur de particules (100) selon l'une des revendications 1 à 4,
**caractérisé en ce que** la plaque perforée (121) est réalisée de manière bombée et convexe.

6. Boîtier de batterie (2) qui est conçu pour l'encapsulation étanche aux gaz d'au moins un module de batterie (3), comprenant une garniture isolante (4) comportant au moins un passage (5) agencé dans celle-ci qui est conçu pour la liaison fluidique de l'espace intérieur du boîtier de batterie (2) à son environnement au-dessus d'une valeur limite de surpression prédéterminée dans l'espace intérieur,
**caractérisé en ce qu'**un séparateur de particules (100) selon l'une des revendications précédentes est agencé dans l'au moins un passage (5) et au moins une chambre de séparation (10) est ménagée dans la garniture isolante (4), laquelle chambre de séparation est reliée fluidiquement à l'éjecteur de particules (112) de l'au moins un séparateur de particules (100).

7. Bloc-batterie (1) comprenant un boîtier de batterie (2) selon la revendication 6, comportant au moins un module de batterie (3) encapsulé dans le boîtier de batterie (2).

8. Bloc-batterie (1) selon la revendication 7,
**caractérisé en ce que** l'au moins un module de batterie (3) comprend au moins une cellule de batterie lithium-ion.

9. Véhicule automobile comportant un bloc-batterie (1) selon la revendication 7 ou 8 qui est conçu pour l'alimentation et/ou le fonctionnement du véhicule automobile.
